# EUROPÄISCHE PATENTSCHRIFT

(11) **EP 2 829 171 B1**
(45) Veröffentlichungstag und Bekanntmachung des Hinweises auf die Patenterteilung: **20.06.2018**
(21) Anmeldenummer: 14165657.9
(22) Anmeldetag: 23.04.2014
(51) Int. Cl.: A01D 75/00, A01D 43/073, A01D 43/08

(54) **Selbstfahrende Erntemaschine und Fahrzeugverbund**
Self-propelled harvester and vehicle combination
Moissonneuse automotrice et véhicule associé

(30) Priorität: 19.07.2013 DE 102013012027
(43) Veröffentlichungstag der Anmeldung: 28.01.2015
(73) Patentinhaber: CLAAS Selbstfahrende Erntemaschinen GmbH, 33428 Harsewinkel (DE)
(72) Erfinder: Krause, Thiilo, 39249 Glinde (DE); Middelberg, René, 49080 Osnabrück (DE)

(56) Entgegenhaltungen:
- EP-A1- 1 977 640
- EP-A1- 2 020 174
- EP-A1- 2 510 775
- US-A1- 2011 318 151

## Beschreibung

Die vorliegende Erfindung betrifft einen Fahrzeugverbund, in welchem eine Erntemaschine mit einem Transportfahrzeug koordiniert zusammenarbeitet.

Erntemaschinen vom Typ Feldhäcksler sind in der Regel nicht ausgelegt, um nennenswerte Mengen an Erntegut an Bord zu speichern; stattdessen wird das gehäckselte Erntegut fortlaufend auf ein benachbart fahrendes Transportfahrzeug übergeladen. Erntemaschinen vom Typ Mähdrescher verfügen zwar meist über eingebaute Erntegutspeicher, so dass sie im Ernteeinsatz nicht ständig von einem Transportfahrzeug begleitet sein müssen, doch ist es auch hier wünschenswert, den Inhalt des Erntegutspeichers während der Fahrt auf ein Transportfahrzeug überladen zu können, um in der für das Überladen benötigten Zeit den Erntevorgang nicht unterbrechen zu müssen.

Wenn Erntemaschine und Transportfahrzeug zum Überladen nebeneinander herfahren, sollte der Abstand zwischen beiden größer sein als die seitliche Ausladung eines Erntevorsatzes der Erntemaschine, damit beide Fahrzeuge in Fahrtrichtung relativ zueinander frei manövrierbar sind, ohne dass ein Zusammenstoß des Transportfahrzeugs mit dem Erntevorsatz zu befürchten ist. Je breiter dieser Erntevorsatz ist, umso ausladender muss folglich auch eine Überladeeinrichtung wie etwa ein Auswurfkrümmer der Erntemaschine sein, um das Transportfahrzeug erreichen zu können. Je länger der Auswurfkrümmer ist, umso stärker neigt er aufgrund von Unebenheiten des befahrenen Untergrundes zum Schwanken. Dies stellt nicht nur eine erhebliche mechanische Belastung für die Überladeeinrichtung dar, es verhindert auch eine genaue Kontrolle der Auftreffposition des übergeladenen Ernteguts am Transportfahrzeug. Im Extremfall kann Erntegut verloren gehen, weil der Strom des übergeladenen Ernteguts zeitweilig das Transportfahrzeug verfehlt.

Aus US2011/0318151A1 ist ein Transportfahrzeug bekannt, bei dem eine Übernahmeeinrichtung in Art eines Förderbandes von einem Laderaum des Transportfahrzeugs aus zur Seite ausschwenkbar ist. Indem die Überladeeinrichtung des Erntefahrzeugs und die Übernahmeeinrichtung des Transportfahrzeugs gemeinsam den Zwischenraum zwischen den Fahrzeugen überbrücken, kann die Überladeeinrichtung kürzer gebaut werden. Dadurch verringert sich zwar erheblich das Trägheitsmoment der Überladeeinrichtung und folglich auch deren mechanische Belastung durch Schaukelbewegungen, da jedoch an der Übernahmeeinrichtung die Oberfläche, auf die das Erntegut auftreffen muss, erheblich kleiner ist als bei direktem Überladen in den Laderaum, bleibt die Gefahr, dass Erntegut sein Ziel verfehlt und verloren geht, bestehen oder ist sogar verstärkt.

EP 2 020 174 A1 offenbart einen gattungsgemäßen Fahrzeugverbund. Aufgabe der Erfindung ist, einen Fahrzeugverbund mit einer solchen Erntemaschine zu schaffen, bei denen die Gefahr von Erntegutverlusten beim Überladen verringert ist.

Die Aufgabe wird mit einem Fahrzeugverbund gemäß Anspruch 1 gelöst, wobei bei einer selbstfahrenden Erntemaschine mit wenigstens einer Überladeeinrichtung zum Fördern von aufgenommenem und verarbeitetem Erntegut zu einem Transportfahrzeug und einer Steuereinheit zum Steuern der Überladeeinrichtung anhand von charakteristischen Parametern wenigstens des Transportfahrzeugs diese charakteristischen Parameter die Position einer Übernahmeeinrichtung des Transportfahrzeugs umfassen und die Steuereinheit anhand der erfassten Position der Übernahmeeinrichtung die Position der Überladeeinrichtung relativ zur Übernahmeeinrichtung steuert, um einen Auftreffpunkt des Ernteguts auf der Übernahmeeinrichtung positioniert zu halten.

Zum Steuern der Position der Überladeeinrichtung relativ zur Übernahmeeinrichtung kann die Steuereinheit die Geschwindigkeit der Erntemaschine und/oder des Transportfahrzeugs beeinflussen.

Des weiteren kann die Steuereinheit zum Steuern der Position der Überladeeinrichtung relativ zur Übernahmeeinrichtung die Orientierung der Überladeeinrichtung an der Erntemaschine beeinflussen.

Wenn auf eine Übernahmeeinrichtung anstatt direkt in den Laderaum eines Transportfahrzeugs übergeladen wird, können Verluste auch dadurch entstehen, dass Erntegut sich auf der Überladeeinrichtung türmt und seitlich abrutscht. Um diese Gefahr zu begrenzen, ohne gleichzeitig die Übernahmeeinrichtung ständig mit hoher Fördergeschwindigkeit laufen lassen zu müssen, kann zweckmäßigerweise vorgesehen sein, dass die Steuereinheit den Erntegutdurchsatz in der selbstfahrenden Erntemaschine erfasst und ein für den Erntegutdurchsatz repräsentatives Steuersignal ausgibt. Ein solches Steuersignal kann vom Transportfahrzeug genutzt werden, um die Geschwindigkeit der Überladeeinrichtung zu steuern.

Gegenstand der Erfindung ist ein Fahrzeugverbund mit einer selbstfahrenden Erntemaschine wie oben beschrieben und einem Transportfahrzeug. Erfindungsgemäß ist in einem solchen Verbund die Übernahmeeinrichtung am Transportfahrzeug bewegbar. Da die Steuereinheit der selbstfahrenden Erntemaschine die Position der Überladeeinrichtung basierend auf der erfassten Position der Übernahmeeinrichtung relativ zu der Erntemaschine steuert, werden Bewegungen der Übernahmeeinrichtung relativ zum Transportfahrzeug automatisch ausgeglichen, d.h. während Überlade- und Übernahmeeinrichtung sich praktisch nicht gegeneinander bewegen, kann sich ein Laderaum des Transportfahrzeugs gewissermaßen unter der Übernahmeeinrichtung bewegen, ohne dass dies einen Einfluss auf den Überladevorgang selber hätte. Die Entscheidung, wie die Übernahmeeinrichtung am Transportfahrzeug positioniert sein soll und welchen Bereich des Laderaums sie somit belädt, kann von einer Steuereinheit des Transportfahrzeugs autonom getroffen werden. Die Steuereinheit der Erntemaschine braucht daher die Geometrie des Laderaums weder zu kennen noch zu berücksichtigen, was die Kooperation der Erntemaschine mit unterschiedlichen Typen von Transportfahrzeugen erleichtert.

Die Förderrichtung der Übernahmeeinrichtung ist quer zur Fahrtrichtung des Transportfahrzeugs orientiert, um ein Überladen zu ermöglichen, während die Erntemaschine und das Transportfahrzeug nebeneinander fahren. Um unterschiedliche Bereiche des Laderaums des Transportfahrzeugs beladen zu können, ist die Übernahmeeinrichtung zweckmäßigerweise wenigstens in Fahrtrichtung des Transportfahrzeugs bewegbar.

Die Steuereinheit des Transportfahrzeugs ist vorzugsweise eingerichtet, die Position der Übernahmeeinrichtung anhand der Verteilung des übergeladenen Ernteguts im Transportfahrzeug zu steuern. Da die Steuereinheit des Transportfahrzeugs nur in der Lage sein muss, mit Beladungssensoren desselben Transportfahrzeugs zusammen zu arbeiten, genügt eine einfach strukturierte Steuereinheit, um Fehlbeurteilungen des Beladungszustandes und daraus resultierende Störungen des Überladeprozesses zu vermeiden.

Um die Zusammenarbeit in dem erfindungsgemäßen Fahrzeugverbund zu effektivieren, kann die Steuereinheit des Transportfahrzeugs eingerichtet sein, der Steuereinheit der selbstfahrenden Erntemaschine eine geplante Bewegung der Übernahmeeinrichtung zu signalisieren. So kann die Steuereinheit der Erntemaschine unmittelbar mit Beginn der Bewegung der Übernahmeeinrichtung oder sogar auch vorher mit einer passenden Steuerung der Position der Überladeeinrichtung beginnen und ist nicht darauf angewiesen, dass die Positionsänderung der Übernahmeeinrichtung beobachtbar wird.

Die Übernahmeeinrichtung kann insbesondere ein Förderband umfassen.

Die Aufgabe wird ferner gelöst durch ein Verfahren zum Koordinieren des Überladens von Erntegut von einer selbstfahrenden Erntemaschine auf ein Transportfahrzeug gemäß Anspruch 10 mit den Schritten
b) Erfassen der Position einer Übernahmeeinrichtung des Transportfahrzeugs,
c) anhand der erfassten Position der Übernahmeeinrichtung, Steuern der Position der Überladeeinrichtung relativ zur Übernahmeeinrichtung, um einen Auftreffpunkt des Ernteguts auf der Übernahmeeinrichtung positioniert zu halten.

Diesen Schritten kann ein Schritt
a) Verschieben der Übernahmeeinrichtung am Transportfahrzeug, insbesondere von einem Bereich des Transportfahrzeugs mit geringer Restladekapazität zu einem Bereich mit großer Restladekapazität,
vorangehen.

Der Schritt a) wird zweckmäßigerweise von einer Steuereinheit des Transportfahrzeugs ausgeführt, die Schritte b) und c) hingegen von einer Steuereinheit der selbstfahrenden Erntemaschine.

Des weiteren können folgende Schritte vorgesehen werden:
d) Erfassen des Erntegutdurchsatzes an der selbstfahrenden Erntemaschine und
e) Steuern der Geschwindigkeit der Übernahmeeinrichtung (10) anhand des erfassten Durchsatzes.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen erfindungsgemäßen Fahrzeugverbund im Feldeinsatz;
- Fig. 2: ein Transportfahrzeug eines erfindungsgemäßen Verbundes in einer schematischen Vorderansicht; und
- Fig. 3: ein Blockdiagramm des Fahrzeugverbundes.

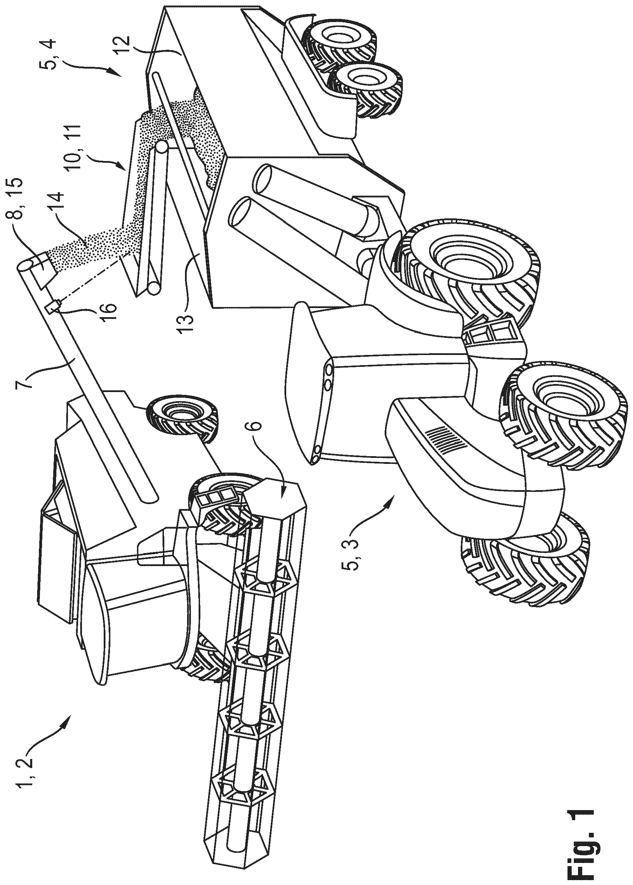

Fig. 1 zeigt als Beispiel für einen erfindungsgemäßen Fahrzeugverbund im Feldeinsatz einen Mähdrescher 1 als selbstfahrende Erntemaschine 2 und einen Traktor 3 mit Anhänger 4 als Transportfahrzeug 5. Die seitliche Ausladung eines Erntevorsatzes 6 am Mähdrescher 1 ist größer als die eines am Mähdrescher 1 schwenkbar montierten, hier in eine Überladestellung ausgeschwenkten Auswurfkrümmers 7. Um den Abstand zwischen einem Auswurfende 8 des Auswurfkrümmers 7 und dem Anhänger 4 quer zur Fahrtrichtung von Mähdrescher 1 und Traktor 3 zu überbrücken, ist an einer Bordwand des Anhängers 4 eine Übernahmeeinrichtung 10, hier in Form eines Förderbandes 11, montiert. Die Übernahmeeinrichtung 10 erstreckt sich hier quer zur Fahrtrichtung des Mähdreschers 1 und des Traktors 3. Zum Fahren im Straßenverkehr ist sie in eine Stellung versetzbar, in der sie sich vollständig und ohne über Bordwände überzustehen, über einer von den Bordwänden begrenzten Ladefläche 12 des Anhängers 4 erstreckt.

In der gezeigten Überladestellung ist die Übernahmeeinrichtung 10 in Längsrichtung des Anhängers 4 entlang der dem Mähdrescher 1 zugewandten seitlichen Bordwand 13 verstellbar. Die Übernahmeeinrichtung 10 kann außerdem quer zur Fahrtrichtung längenverstellbar sein, zum Beispiel, indem das Förderband 11 als Ganzes quer zur Bordwand 13 verstellbar ist, oder in dem die Übernahmeeinrichtung 10 in mehrere gegeneinander bewegliche Abschnitte gegliedert ist.

Um den Strom von auf das Förderband 11 übergeladenem Erntegut 14 zu lenken, ist auch der Auswurfkrümmer 7 verstellbar. Seine Freiheitsgrade umfassen in an sich bekannter Weise eine Drehung um eine vertikale Achse, die durch seine an der Erntemaschine 2 befestigte Basis verläuft, eine Drehung um eine horizontal durch die Basis verlaufende Achse sowie eine Schwenkbewegung einer Klappe 15 am Auswurfende 8.

Eine Kamera 16 ist am Auswurfkrümmer 7 montiert und ausgerichtet, um den Weg des ausgeworfenen Ernteguts 14 zu verfolgen.

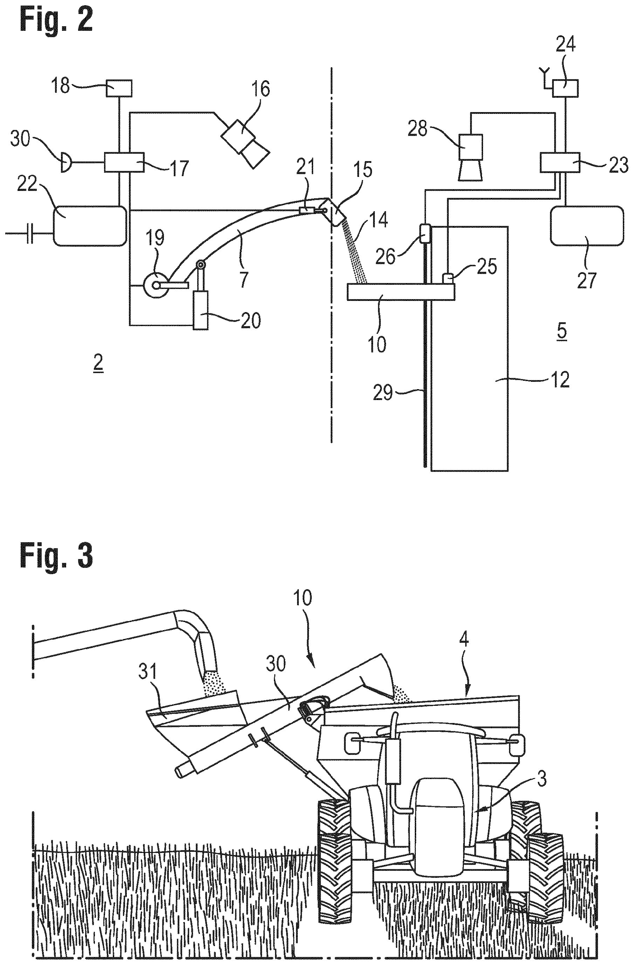

Das Blockdiagramm der Fig. 2 zeigt die Kamera 16, verbunden mit einer Steuereinheit 17 des Mähdreschers 1. Die Steuereinheit 17 ist ferner mit einer Funkschnittstelle 18 verbunden, um Daten zu senden und zu empfangen. Weitere von der Steuereinheit 17 ausgehende Steuerleitungen führen zu einem Elektromotor 19, der die Drehung des Auswurfkrümmers 7 um die vertikale Achse antreibt, sowie zu Stellgliedern 20, 21 zum Schwenken des Auswurfkrümmers 7 um die horizontale Achse bzw. zum Schwenken der Klappe 15, sowie zu einem Verbrennungsmotor 22, der die Fortbewegung des Mähdreschers 1 antreibt.

Auf der rechten Seite der Fig. 2 sind Komponenten des Transportfahrzeugs 5 gezeigt. Auch dieses weist eine Steuereinheit 23 auf, die mit einer Funkschnittstelle 24, mit einem Sensor zum Beurteilen der Erntegutverteilung auf der Ladefläche 12 und Motoren 25, 26, 27 verbunden ist. Der Sensor ist in Fig. 2 als eine zweite, erhöht über der Ladefläche 12 angeordnete Kamera 28 dargestellt, deren Bilder es der Steuereinheit 23 ermöglichen, zu beurteilen, an welcher Stelle der Ladefläche 12 das Erntegut wie weit von der Oberkante der Bordwände entfernt ist.

Der Motor 25 treibt die Förderbewegung des Förderbandes 11 an. Der Motor 26 dient zum Verstellen der Übernahmeeinrichtung 10 entlang der Bordwand 13, hier zum Beispiel durch Drehen einer Gewindestange 29, die sich entlang der Bordwand 13 erstreckt und an der ein Innengewinde der Übernahmeeinrichtung 10 angreift. Der Motor 27 ist der Antriebsmotor des Traktors 3.

Während eines Überladevorgangs von Erntegut vom Mähdrescher 1 auf das Transportfahrzeug 5 überwacht die Kamera 16 des Mähdreschers 1 kontinuierlich den Strom des übergeladenen Ernteguts 14 und die Position der Übernahmeeinrichtung 10 relativ zum Strom des Ernteguts 14. Eine Abweichung der tatsächlichen Position von einer Sollposition wird durch die Steuereinheit 17 erfasst, und es wird eine Entscheidung getroffen, welcher der diversen oben erwähnten Motoren oder Stellglieder angesteuert wird, um die Sollposition wieder herzustellen. Da die Steuerung der Position des Auswurfkrümmers 7 am Mähdrescher 1 über den Elektromotor 19 und das Stellglied 20 mit einem nicht zu vernachlässigenden Spiel behaftet ist, wird eine geringe Abweichung von der Sollposition, wie sie sich insbesondere aufgrund geringfügig unterschiedlicher Geschwindigkeiten von Mähdrescher 1 und Transportfahrzeug 5 ergeben kann, vorrangig durch Beeinflussung der Fahrtgeschwindigkeit eines dieser beiden Fahrzeuge korrigiert. Zu diesem Zweck kann die Steuereinheit 17 direkt den Motor 22 des Mähdreschers 1 oder, über die Funkschnittstellen 18, 24, den Motor 27 des Traktors ansprechen. Bevorzugtermaßen wird die Geschwindigkeit des Traktors 3 gesteuert, da eine Änderung der Geschwindigkeit des Mähdreschers 1 auch den Erntegutdurchsatz im Innern des Mähdreschers beeinflussen würde und eine Anpassung von Parametern des Dreschwerks nach sich ziehen könnte.

Während des Überladens überwacht die Kamera 28 fortlaufend den Füllstand des Ernteguts auf der Ladefläche 12. Solange die Überladeeinrichtung 10 nicht entlang der Bordwand 13 verschoben wird, lädt sie das Erntegut auf der Ladefläche 12 immer an derselben Stelle ab. Wenn die Steuereinheit 23 anhand der Bilder der Kamera 28 erkennt, dass an dieser Stelle der Füllstand einen Grenzwert erreicht, wählt sie eine andere Stelle auf der Ladefläche 12 aus, an der noch Ladekapazität besteht.

Einer einfachen Ausgestaltung zufolge spricht die Steuereinheit 23 anschließend den Motor 26 an, um die Übernahmeeinrichtung 10 an die ausgewählte Stelle zu verschieben. Die daraus resultierende Verschiebung der Übernahmeeinrichtung 10 auch relativ zum Strom des Ernteguts 14 wird von der Kamera 16 erfasst und veranlasst die Steuereinheit 17 des Mähdreschers 1, die Position des Auswurfkrümmers 7 nachzuführen. Die Verschiebung der Übernahmeeinrichtung 10 entlang der Bordwand 13 kann deutlich schneller sein als das oben erwähnte Driften von Mähdrescher 1 und Transportfahrzeug 5 gegeneinander, für die entsprechend schnelle erforderliche Nachführung des Auswurfkrümmers 7 kann es daher zweckmäßiger sein, den Auswurfkrümmer 7 am Mähdrescher 1 zu verstellen, anstatt die Geschwindigkeit von Mähdrescher 1 oder Transportfahrzeug 5 stark zu verändern. Eine Steuerung der Geschwindigkeit von Mähdrescher 1 oder Transportfahrzeug 5 findet vorzugsweise erst am Ende des Verstellvorgangs statt, wenn die Übernahmeeinrichtung 10 an der Bordwand 13 wieder zum Stillstand gekommen ist und nur noch Feinkorrekturen des Auftreffpunktes des Erntegutstroms 14 auf der Übernahmeeinrichtung 10 vonnöten sind, oder wenn die Bewegungsfreiheit des Auswurfkrümmers 7 am Mähdrescher 1 für sich allein nicht ausreicht, um der Bewegung der Übernahmeeinrichtung 10 entlang der Bordwand 13 zu folgen.

Einer weiterentwickelten Ausgestaltung zufolge meldet die Steuereinheit 23, wenn sie eine neue Position für die Übernahmeeinrichtung 10 festgelegt hat, die Richtung und vorzugsweise auch das Ausmaß der bevorstehenden Bewegung der Übernahmeeinrichtung 10 über die Funkschnittstellen 24, 18 an die Steuereinheit 17. Dies ermöglicht eine Synchronisierung der Bewegungen der Übernahmeeinrichtung 10 und des Auswurfkrümmers 7. Es muss daher nicht erst zu einer von der Kamera 16 erfassbaren Verschiebung der Übernahmeeinrichtung 10 relativ zum Auswurfkrümmer 7 kommen, bevor die Steuereinheit 17 beginnt, die Position des Auswurfkrümmers 7 nachzuführen; auch bei hoher Verstellgeschwindigkeit der Übernahmeeinrichtung 10 kann der Auftreffpunkt des Erntegutstroms 14 auf der Übernahmeeinrichtung 10 mit guter Genauigkeit konstant gehalten werden, und das Risiko von Erntegutverlusten beim Überladen ist minimiert.

Der Mähdrescher 1 verfügt in fachüblicher Weise über einen Korntank, aus dem das überzuladende Erntegut dem Auswurfkrümmer 7 zugeführt wird. Die Rate, mit der das Korn übergeladen wird, ist daher weitgehend willkürlich festlegbar und kann während des gesamten Überladevorgangs konstant gehalten werden. Folglich kann auch das Förderband 11 mit einer an die Überladerate angepassten, konstanten Geschwindigkeit durch den Motor 25 angetrieben werden. Ein anderer Typ von Erntemaschine, an dem die vorliegende Erfindung anwendbar ist, ist ein Feldhäcksler. Dieser verfügt im Allgemeinen über keinen Zwischenspeicher für das Erntegut, sondern die Rate, mit der das Erntegut am Auswurfkrümmer 7 übergeladen wird, ist dieselbe, mit der es vom Feldhäcksler aufgenommen und verarbeitet wird. Die Überladerate ist damit abhängig von der Dichte des Pflanzenbestands auf dem Feld und kann während des Überladens schwanken. Um dieser Tatsache Rechnung zu tragen, kann die Steuereinheit 17 mit einem Sensor 30 zum Erfassen des Erntegutdurchsatzes verbunden sein und dessen Erfassungsergebnisse über die Funkschnittstellen 18, 24 an die Steuereinheit 23 des Transportfahrzeugs 5 weitergeben. Diese legt daraufhin die Drehzahl des Motors 25 proportional zum Erntegutdurchsatz fest. Indem folglich das Förderband 11 um so schneller läuft, je höher der Erntegutdurchsatz ist, kann die Schütthöhe des Ernteguts auf dem Förderband 11 begrenzt werden, so dass kein Erntegut seitlich vom Förderband 11 abrutscht und verloren geht.

Fig. 3 zeigt ein Gespann aus Traktor 3 und Anhänger 4 mit einer alternativen Übernahmeeinrichtung 10 in einer Vorderansicht. Die Übernahmeeinrichtung 10 hat hier ein rohrförmiges Gehäuse 30, in dem eine Förderschnecke rotiert. An einem vom Anhänger 4 entfernten Ende des Gehäuses 30 ist ein Trichter 31 angebracht, um das vom Auswurfkrümmer 7 abgegebene Erntegut 14 aufzufangen und der Förderschnecke zuzuführen. Der Trichter 31 macht den Überladevorgang unempfindlich gegen Schaukelbewegungen des Auswurfkrümmers 7. Das geschlossenwandige Gehäuse 30 verhindert Verluste von Erntgut während des Transports vom Trichter 31 zum Laderaum. Sein Durchmesser kann deutlich kleiner sein als die Abmessungen des Trichters 31.

### Bezugszeichen

- 1: Mähdrescher
- 2: Erntemaschine
- 3: Traktor
- 4: Anhänger
- 5: Transportfahrzeug
- 6: Erntevorsatz
- 7: Auswurfkrümmer
- 8: Auswurfende
- 10: Übernahmeeinrichtung
- 11: Förderband
- 12: Ladefläche
- 13: Bordwand
- 14: Erntegut
- 15: Klappe
- 16: Kamera
- 17: Steuereinheit
- 18: Funkschnittstelle
- 19: Elektromotor
- 20: Stellglied
- 21: Stellglied
- 22: Verbrennungsmotor
- 23: Steuereinheit
- 24: Funkschnittstelle
- 25: Motor
- 26: Motor
- 27: Motor
- 28: Kamera
- 29: Gewindestange
- 30: Gehäuse
- 31: Trichter

## Patentansprüche

1. Fahrzeugverbund mit einer selbstfahrenden Erntemaschine (2) und einem Transportfahrzeug (5), wobei die selbstfahrende Erntemaschine wenigstens eine Überladeeinrichtung (7) zum Fördern von aufgenommenem und verarbeitetem Erntegut zu dem Transportfahrzeug (5) und eine Steuereinheit (17) umfasst, wobei dem Transportfahrzeug (5) eine Übernahmeeinrichtung (10) zugeordnet ist, wobei die Steuereinheit (17) zum Steuern der Überladeeinrichtung (7) anhand von charakteristischen Parametern wenigstens des Transportfahrzeugs (5) eingerichtet ist, wobei die charakteristischen Parameter die Position der Übernahmeeinrichtung (10) des Transportfahrzeugs (5) umfassen und die Steuereinheit (17) eingerichtet ist anhand der erfassten Position der Übernahmeeinrichtung (10) die Position der Überladeeinrichtung (7) relativ zur Übernahmeeinrichtung (10) zu steuern, um einen Auftreffpunkt des Ernteguts (14) auf der Übernahmeeinrichtung (10) positioniert zu halten, **dadurch gekennzeichnet, dass** die Übernahmeeinrichtung (10) am Transportfahrzeug (2) bewegbar ist und die Förderrichtung der Übernahmeeinrichtung (10) quer zur Fahrtrichtung des Transportfahrzeugs (5) orientiert ist.

2. Fahrzeugverbund nach Anspruch 1, **dadurch gekennzeichnet, dass** die Steuereinheit (17) zum Steuern der Position der Überladeeinrichtung (7) relativ zur Übernahmeeinrichtung (10) die Geschwindigkeit der Erntemaschine (2) und/oder des Transportfahrzeugs (5) beeinflusst.

3. Fahrzeugverbund nach Anspruch 1 oder 2, **dadurch gekennzeichnet, dass** die Steuereinheit (17) zum Steuern der Position der Überladeeinrichtung (7) relativ zur Übernahmeeinrichtung (10) die Orientierung der Überladeeinrichtung (7) an der Erntemaschine (2) beeinflusst.

4. Fahrzeugverbund nach einem der vorhergehenden Ansprüche, **dadurch gekennzeichnet, dass** die Steuereinheit (17) den Erntegutdurchsatz in der selbstfahrenden Erntemaschine (2) erfasst und ein für den Erntegutdurchsatz repräsentatives Steuersignal ausgibt.

5. Fahrzeugverbund nach Anspruch1, **dadurch gekennzeichnet, dass** die Übernahmeeinrichtung (10) am Transportfahrzeug (2) in dessen Fahrtrichtung bewegbar ist.

6. Fahrzeugverbund nach einem der Ansprüche5, **dadurch gekennzeichnet, dass** eine Steuereinheit (23) des Transportfahrzeugs (5) eingerichtet ist, die Position der Übernahmeeinrichtung (10) anhand der Verteilung des übergeladenen Ernteguts im Transportfahrzeug (5) zu steuern.

7. Fahrzeugverbund nach einem der Ansprüche5 bis 6, **dadurch gekennzeichnet, dass** die Steuereinheit (23) des Transportfahrzeugs (5) eingerichtet ist, der Steuereinheit (17) der selbstfahrenden Erntemaschine (2) eine geplante Bewegung der Übernahmeeinrichtung (10) zu signalisieren.

8. Fahrzeugverbund nach einem der Ansprüche 5 bis 6, **dadurch gekennzeichnet, dass** die Fördergeschwindigkeit der Übernahmeeinrichtung (10) entsprechend dem Erntegutdurchsatz variabel ist.

9. Fahrzeugverbund nach einem der Ansprüche 5 bis 8, **dadurch gekennzeichnet, dass** die Übernahmeeinrichtung (10) ein Förderband (11) oder eine Förderschnecke umfasst.

10. Verfahren zum Koordinieren des Überladens von Erntegut in einem Fahrzeugverbund nach Anspruch 1 mit den Schritten
b) Erfassen der Position einer Übernahmeeinrichtung (10) des Transportfahrzeugs (5), und
c) anhand der erfassten Position der Übernahmeeinrichtung (10), Steuern der Position der Überladeeinrichtung (7) relativ zur Übernahmeeinrichtung (10), um einen Auftreffpunkt des Ernteguts (14) auf der Übernahmeeinrichtung (10) positioniert zu halten.

11. Verfahren nach Anspruch 10, mit dem Schritt a) Verschieben der Übernahmeeinrichtung (10) am Transportfahrzeug (5), insbesondere von einem Bereich des Transportfahrzeugs (5) mit geringer Restladekapazität zu einem Bereich mit großer Restladekapazität.

12. Verfahren nach Anspruch 11, bei dem der Schritt a) von einer Steuereinheit (23) des Transportfahrzeugs (5) und die Schritte b) und c) von einer Steuereinheit (17) der einer selbstfahrenden Erntemaschine (2) ausgeführt werden.

13. Verfahren nach Anspruch 11 oder 12, mit den weiteren Schritten:
d) Erfassen des Erntegutdurchsatzes an der selbstfahrenden Erntemaschine und
e) Steuern der Geschwindigkeit der Übernahmeeinrichtung (10) anhand des erfassten Durchsatzes.

## Claims

1. Vehicle combination with a self-propelled harvester (2) and a transport vehicle (5), wherein the self-propelled harvester comprises at least one transfer device (7) for conveying picked-up and processed crop material to the transport vehicle (5) and a control unit (17), wherein a receiving device (10) is allocated to the transport vehicle (5), wherein the control unit (17) is equipped for controlling the transfer device (7) based on characteristic parameters of at least the transport vehicle (5), wherein the characteristic parameters comprise the position of the receiving device (10) of the transport vehicle (5) and the control unit (17) is equipped, based on the recorded position of the receiving device (10), to control the position of the transfer device (7) relative to the receiving device (10) in order to keep a point of impact of the crop material (14) positioned on the receiving device (10), **characterized in that** the receiving device (10) is moveable on the transport vehicle (2) and the conveying direction of the receiving device (10) is oriented transverse to the direction of travel of the transport vehicle (5).

2. Vehicle combination according to claim 1,
**characterized in that**
the control unit (17) influences the speed of the harvester (2) and/or of the transport vehicle (5) for controlling the position of the transfer device (7) relative to the receiving device (10).

3. Vehicle combination according to claim 1 or 2,
**characterized in that**
the control unit (17) influences the orientation of the transfer device (7) to the harvester (2) for controlling the position of the transfer device (7) relative to the receiving device (10).

4. Vehicle combination according to one of the preceding claims,
**characterized in that**
the control unit (17) records the crop material throughput in the self-propelled harvester (2) and emits a control signal representative of the crop material throughput.

5. Vehicle combination according to claim 1, **characterized in that** the receiving device (10) is moveable on the transport vehicle (2) in the direction of travel thereof.

6. Vehicle combination according to one of claims 5, **characterized in that** a control unit (23) of the transport vehicle (5) is equipped to control the position of the receiving device (10) based on the distribution of the transferred crop material in the transport vehicle (5).

7. Vehicle combination according to one of claims 5 to 6, **characterized in that** the control unit (23) of the transport vehicle (5) is equipped to signal a planned movement of the receiving device (10) to the control unit (17) of the self-propelled harvester (2).

8. Vehicle combination according to one of claims 5 to 6, **characterized in that** the conveying speed of the receiving device (10) is variable corresponding to the crop material throughput.

9. Vehicle combination according to one of claims 5 to 8, **characterized in that** the receiving device (10) comprises a conveyor belt (11) or a screw conveyor.

10. Method for co-ordinating the transfer of crop material in a vehicle combination according to claim 1 with the steps
b) recording the position of a receiving device (10) of the transport vehicle (5), and
c) based on the recorded position of the receiving device (10), controlling the position of the transfer device (7) relative to the receiving device (10) in order to keep a point of impact of the crop material (14) positioned on the receiving device (10).

11. Method according to claim 10, with the step a) shifting the receiving device (10) on the transport vehicle (5), in particular from an area of the transport vehicle (5) with low remaining loading capacity to an area with high remaining loading capacity.

12. Method according to claim 11, in which the step a) is performed by a control unit (23) of the transport vehicle (5) and the steps b) and c) are performed by a control unit (17) of the self-propelled harvester (2).

13. Method according to claim 11 or 12, with the further steps:
d) recording the crop material throughput at the self-propelled harvester and
e) controlling the speed of the receiving device (10) based on the recorded throughput.

## Revendications

1. Combinaison de véhicules comprenant une machine de récolte automotrice (2) et un véhicule de transport (5), la machine de récolte automotrice comprenant au moins un équipement de transfert (7) pour amener du produit de récolte ramassé et traité au véhicule de transport (5) et une unité de commande (17), au véhicule de transport (5) étant associé un équipement de réception (10), l'unité de commande (17) étant agencée pour commander l'équipement de transfert (7) sur la base de paramètres caractéristiques au moins du véhicule de transport (5), les paramètres caractéristiques englobant la position de l'équipement de réception (10) du véhicule de transport (5), et l'unité de commande (17) étant agencée pour commander la position de l'équipement de transfert (7) par rapport à l'équipement de réception (10) sur la base de la position détectée afin de maintenir en position le point d'impact du produit de récolte (14) sur l'équipement de réception (10), **caractérisée en ce que** l'équipement de réception (10) est déplaçable sur le véhicule de transport (2), et la direction d'amenée de l'équipement de réception (10) est orientée transversalement au sens de la marche du véhicule de transport (5).

2. Combinaison de véhicules selon la revendication 1, **caractérisée en ce que**, pour commander la position de l'équipement de transfert (7) par rapport à l'équipement de réception (10), l'unité de commande (17) agit sur la vitesse de la machine de récolte (2) et/ou du véhicule de transport (5).

3. Combinaison de véhicules selon la revendication 1 ou 2, **caractérisée en ce que**, pour commander la position de l'équipement de transfert (7) par rapport à l'équipement de réception (10), l'unité de commande (17) agit sur l'orientation de l'équipement de transfert (7) sur la machine de récolte (2).

4. Combinaison de véhicules selon une des revendications précédentes, **caractérisée en ce que** l'unité de commande (17) détecte le débit de produit de récolte dans la machine de récolte automotrice (2) et émet un signal de commande représentatif du débit de produit de récolte.

5. Combinaison de véhicules selon la revendication 1, **caractérisée en ce que** l'équipement de réception (10) est déplaçable sur le véhicule de transport (2) dans le sens de la marche de celui-ci.

6. Combinaison de véhicules selon une des revendications 5, **caractérisée en ce qu'**une unité de commande (23) du véhicule de transport (5) est agencée pour commander la position de l'équipement de réception (10) sur la base de la répartition, dans le véhicule de transport (5), du produit de récolte transféré.

7. Combinaison de véhicules selon une des revendications 5 à 6, **caractérisée en ce que** l'unité de commande (23) du véhicule de transport (5) est agencée pour signaler à l'unité de commande (17) de la machine de récolte automotrice (2) un déplacement prévu de l'équipement de réception (10).

8. Combinaison de véhicules selon une des revendications 5 à 6, **caractérisée en ce que** la vitesse d'amenée de l'équipement de réception (10) est variable en fonction du débit de produit de récolte.

9. Combinaison de véhicules selon une des revendications 5 à 8, **caractérisée en ce que** l'équipement de réception (10) comprend une bande de convoyage (11) ou une vis de convoyage.

10. Procédé pour coordonner le transfert de produit de récolte dans une combinaison de véhicules selon la revendication 1, comprenant les étapes consistant à
b) détecter la position d'un équipement de réception (10) du véhicule de transport (5) et
c) sur la base de la position détectée de l'équipement de réception (10), commander la position de l'équipement de transfert (7) par rapport à l'équipement de réception (10) afin de maintenir en position un point d'impact du produit de récolte (14) sur l'équipement de réception (10).

11. Procédé selon la revendication 10, comprenant l'étape consistant à
a) déplacer l'équipement de réception (10) sur le véhicule de transport (5), en particulier depuis une zone du véhicule de transport (5) à faible capacité résiduelle de chargement vers une zone à grande capacité résiduelle de chargement.

12. Procédé selon la revendication 11, dans lequel l'étape a) est réalisée par une unité de commande (23) du véhicule de transport (5) et les étapes b) et c) sont réalisées par une unité de commande (17) d'une machine de récolte automotrice (2).

13. Procédé selon la revendication 11 ou 12, comprenant les étapes supplémentaires consistant à :
d) détecter le débit de produit de récolte sur la machine de récolte automotrice et
e) commander la vitesse de l'équipement de réception (10) sur la base du débit détecté.
